# EUROPEAN PATENT APPLICATION

(11) **EP 4 751 892 A1**
(43) Date of publication of application: **03.06.2026**
(21) Application number: 24383291.2
(22) Date of filing: 28.11.2024
(51) Int. Cl.: B29C 65/18, B29C 65/30, B29C 65/78, B29C 65/74, B29L 31/00

(54) **ALIGNMENT IN A PRODUCTION SYSTEM FOR FLEXIBLE POUCHES**

(71) Applicant: SIG Services AG, 8212 Neuhausen am Rheinfall (CH)
(72) Inventor: SANTINI TORRES, Luis Alberto, 08210 Barberà del Vallès, Barcelona (ES); PIRIS ALBARRAL, José Manuel, 08210 Barberà del Vallès, Barcelona (ES); VAN TUIL, Johannes Wilhelmus, 08210 Barberà del Vallès, Barcelona (ES)
(74) Representative: EP&C

(57) **Abstract**

A production system for the production of flexible pouches comprising a gusset, made from a heat-sealable film material. The production system comprises a bottom heat-sealing device configured to heat-seal one or more bottom regions of one or more of the pouches, a side edge heat-sealing device configured to heat-seal side edge regions of one or more of the pouches and a film material drive, configured to pull the string of interconnected pouches past the bottom heat-sealing device and the side edge heat-sealing device in a transport direction.

The film material drive comprises a first film material drive device, which is configured to control its drive motor on the basis of a sensor signal to align the individual pouches with the one or more bottom sealing units, and which comprises compensator rollers over which a portion of the string of interconnected pouches is guided and which are movable to increase or decrease a length of the portion of the string of interconnected pouches guided over the first compensator rollers.

## Description

The present invention relates to the heat sealing of heat-sealable film material in the production of flexible pouches. For example, the invention envisages the production of flexible stand-up pouches comprising a bottom gusset. The pouches have a pouch body made from a heat-sealable film material, preferably a metal-free heat-sealable film material.

For example, in the production of pouches superimposed walls of heat-sealable film material are sealed onto one another, and onto a fitment when present, by means of a sealing system which comprises multiple sealing stations arranged in series to create for each pouch multiple sealed regions, e.g. along the top, sides, and/or bottom of the pouch, in succession.

For the production of flexible pouches it is known to make use of a packaging machine having a sealing station which is configured to heat-seal a bottom region of the pouches in a string of interconnected pouches made from heat-sealable film material in order to form the bottom of a pouch and having a side edge station that is configured to heat-seal side edge regions of multiple pouches in the string of interconnected pouches. Packaging machines for the production of pouches are also known in embodiments wherein a bottom gusset is formed to create flexible stand-up pouches. Furthermore, other types of flexible pouches may comprise a gusset at one or more of their sides.

An example of a sealing system is disclosed in EP4003704, which discloses a sealing system which is adapted to receive two rolls of heat-sealable film material in the roll handling station, where the rolls are unwound, after which the two walls of the heat-sealable film material are brought against each other, so superimposed onto one another. The superimposed walls are moved through the sealing section along a linear path in a transport direction. In this example, the walls are moved continuously by the film material drive station, whereas it is also possible to pull the walls intermittently, i.e. in successive cycles. The drive station is located downstream of the sealing stations and, for example, has a pair of rollers between which the walls are clamped and an associated drive motor.

It is a desire to produce pouches of metal-free heat-sealable film materials, preferably single-polymer heat-sealable film materials, also called mono-material plastic films, which enhance effective recycling. Such film materials generally only comprise one or more polymeric materials, e.g. just one polymeric material, such as for example one or more layers of one or more of: polyethylene (PE), polypropylene (PP), and polyethylene terephthalate (PET). In embodiments, the film material may have a non-metallic barrier layer, e.g. in view of oxygen transmission, e.g. a barrier layer of ethylene vinyl alcohol (EVOH). Such a layer is often not considered detrimental for recyclability. Due to the absence of a metallic material layer in the film material, these metal-free heat-sealable films are generally weaker, more fragile, than conventional film material which comprises a metal layer. This can in general be described as having a relatively low yield strength and relatively large elasticity, in particular when the film is heated locally during the heat sealing process. In particular at the elevated heat sealing temperatures, the strength of the metal-free film material is, at least temporarily, significantly impaired, giving rise to local distortion when heat sealing is done in the conventional manner.

The known sealing systems, especially when the walls of heat-sealable film material are moved intermittently, may be unsatisfactory for the production of pouches having walls made of metal-free heat-sealable film material, e.g. of single-polymer film material. This is primarily due to excessive stretching of the walls at elevated sealing temperatures. Typically, the sealing stations with the continuously-heated jaws contact the film material walls in the clamped position, so that the seal is made. This contact needs to be terminated as soon as the seal is completed in order to prevent overheating, e.g. local melting, of the walls. However, when the jaws are moved towards their opened position, the walls - then being soft, as they are still warm - become exposed again to pulling forces exerted by the drive station, without the heat sealed region being supported by the jaws. This causes local stretching and deformation, e.g. noticeable as film layer damage, wrinkles, distortion of print on the film material, etc. For example, this brings along the need to reduce the speed of the sealing system in order to allow for a lower pull force, which is economically unattractive. Also when the continuously heated jaws are in their opened position, located at some distance of the walls, the heat radiated off the jaws tends to unduly soften the film material walls.

The present invention aims to provide measures that provide an improved production of flexible pouches, e.g. of flexible stand-up pouches comprising a bottom gusset.

The present invention aims to provide measures that enhance the quality of the seal that is obtained in the film material of the pouch wall, for example at the bottom region and at the triple points of a bottom gusset type flexible stand-up pouch.

The invention provides a production system according to claim 1.

According to a first aspect, the invention provides a production system for the production of flexible pouches, preferably flexible stand-up pouches, e.g. comprising a gusset, made from a heat-sealable film material, preferably a metal-free heat-sealable film material.

The production system comprises:
- a first heat-sealing device, for example a bottom heat-sealing device, configured to heat-seal one or more first regions, e.g. bottom regions, of one or more of the pouches, wherein the first heat-sealing device comprises one or more first sealing units, e.g. bottom sealing units,
- a second-heat sealing device, for example a side edge heat-sealing device, configured to heat-seal one or more second regions, e.g. side edge regions, of one or more of the pouches, wherein the second heat-sealing device comprises one or more second sealing units, e.g. side edge sealing units, and
- a film material drive configured to pull a string of interconnected pouches past the first heat-sealing device and the second heat-sealing device in a transport direction.

The second heat-sealing device is, seen along the transport direction, arranged downstream of the first heat-sealing device along the transport direction.

Throughout the application, the terms first heat-sealing device and bottom heat-sealing device are used interchangeably. Likewise, the terms second heat-sealing device and side edge heat-sealing device are used interchangeably as well. It is to be understood that the side edge heat-sealing device may be positioned upstream of the bottom heat-sealing device, but that the invention also encompasses a reverse order, e.g. with the bottom heat-sealing device being positioned upstream of the side edge heat-sealing device, or any order of arrangement of heat-sealing devices. The same applies for the first respectively second sealing units and the bottom respectively side edge sealing units.

According to the present invention, the film material drive comprises a first film material drive device, which is arranged downstream of the bottom heat-sealing device and upstream of the side edge heat-sealing device, and comprises:
- a first drive unit for pulling the string of interconnected pouches, the first drive unit comprising a first drive motor and a first controller to control the first drive motor, for example the first drive motor being associated with a pair of first drive rollers between which the string of interconnected pouches is clamped,
- a first pouch position sensor, which is located upstream of the first drive unit and is configured to emit a first sensor signal for determining a position relative to the transport direction of the string of interconnected pouches for the purpose of alignment of individual pouches in relation to the one or more bottom sealing units, and
- a first compensator unit for accommodating and varying a first portion of the string of interconnected pouches in order to allow a shift in mutual position between the individual pouches in the string of interconnected pouches at the side edge heat-sealing device and the individual pouches in the string of interconnected pouches at the bottom heat-sealing device, wherein the first compensator unit is, seen along the transport direction, arranged downstream of the first drive unit and upstream of the second heat-sealing device.

The first controller of the first drive unit is configured to control the first drive motor on the basis of the first sensor signal to align the individual pouches with the one or more bottom sealing units, and the first compensator unit may comprise a plurality of first compensator rollers over which a portion of the string of interconnected pouches is guided and which are movable to increase or decrease a length of the portion of the string of interconnected pouches guided over the first compensator rollers.

The film material drive may further comprise a master drive unit, which is, seen along the transport direction, arranged downstream of the side edge heat-sealing device, the second film material drive device and any further sealing devices, such as a top edge sealing device. The master drive unit serves to pull a downstream end of the string of interconnected pouches, for example located upstream of a cutting station. The controlling of the master drive unit may be carried out independent of the first drive unit and the second drive unit, in order to take into account the local stretching of the pouches.

The master drive unit may be configured to exert a major portion of the overall pulling forces that is exerted onto the string of interconnected pouches by the film material drive. The first material film drive unit and the second material film drive unit may thereby serve as compensator units for accommodating and compensating stretching of the film material of the string of interconnected pouches at the respective sealing devices.

Each of the bottom sealing units may comprise:
- a first bottom sealing jaw,
- a second bottom sealing jaw,
- an actuator device configured to move the first and/or second bottom sealing jaws relative to one another between an opened position and a clamped position,
wherein the first bottom sealing jaw comprises a sealing face which faces a bottom region of a respective pouch to simultaneously contact and heat at least a portion of the first wall of the pouch, and/or wherein the second bottom sealing jaw comprises a sealing face which faces a bottom region of a respective pouch to simultaneously contact and heat at least a portion of the second wall of the pouch.

Alternatively or additionally, each of the side edge sealing units may comprise:
- a first side edge sealing jaw,
- a second side edge sealing jaw,
- an actuator device configured to move the first and/or second side edge sealing jaws relative to one another between an opened position and a clamped position,

wherein the first side edge sealing jaw comprises a sealing face which faces one or more side edges of one or more of the pouches to simultaneously contact and heat at least a portion of the first wall at the respective one or more side edges, and/or
wherein the second side edge sealing jaw comprises a sealing face which faces one or more side edges of one or more of the pouches to simultaneously contact and heat at least a portion of the second wall at the respective one or more side edges.

According to the present invention, the pouch production system comprises the bottom heat-sealing device and the side edge heat-sealing device, having the first film material drive device located in between them, seen along the transport direction. Compared to existing pouch production systems, in which a single drive is provided at a far downstream end of the string of interconnected pouches, the first film material drive device only drives the part of the string of interconnected pouches upstream of and including the bottom heat-sealing device. This reduces the length of the part of the string of interconnected pouches that is pulled by the first drive unit and, in accordance, reduces the degree of stretching of this part of the string of interconnected pouches. In particular with mono-material, metal-free film materials, such stretch is preferable avoided as much as possible. As a result, the alignment of the pouches with the bottom sealing jaws may be improved, therewith improving the quality of the sealed pouches.

Furthermore, the present invention provides for the first pouch position sensor to measure a position of the pouches, which represents a relative position between the pouches and the bottom sealing jaws. The first drive unit is associated with the first pouch position sensor, so as to control the pulling of the string of interconnected pouches in dependence of the measured relative position. In case the measured position indicates that the pouches project somewhat upstream in relation to the bottom sealing unit, the first drive unit may be controlled to pull the string of interconnected pouches over a larger length, to move the pouches in alignment with the bottom sealing units, or vice versa in case the pouches project downstream. The first pouch position sensor is located at the bottom heat-sealing device, for example in between the bottom sealing unit or in front of the bottom sealing units, so that the measured pouch position accurately indicates the actual position of the pouches in between the bottom sealing units during sealing of the bottom sealing regions.

A further benefit of the invention is that the first pouch position sensor and associated first drive unit may allow the movement of the pouches to be adjusted to the degree of stretching, even though the degree of stretching normally differs per type of sealing device. Hence, in the bottom heat-sealing device, parts of the pouches are heated that normally comprise four layers of film material, i.e. two other walls and two bottom gusset walls. This differs from side edge heat-sealing devices or top edge sealing devices, where typically two layers of film material are provided. As a result, the stretching will be different between these sealing devices when a single downstream drive unit were to be provided. According to the present invention, the pouch positions in the respective sealing devices are adjusted in dependence of their degree of stretching, thus allowing for improved alignment in all sealing devices.

The first compensator unit provides to at least temporarily accumulate part of the length of the string of interconnected pouches. In this way, adjustment of the first compensator unit, i.e. changing the length of the part of the string of interconnected pouches in the first compensator unit, may take up excess length or discharge a shortage in length of the string of interconnected pouches after adjustment of the pouch position, so that the side edge heat-sealing device downstream of the first film material drive device will not be influenced by the adjustment. Instead, the first compensator unit may allow the pouch position adjustment in the bottom heat-sealing device to be carried out independently of other pouch position adjustments, if any, in other stations of the production system.

The first compensator unit may comprise the first compensator rollers along which the string of interconnected pouches is guided, whereby a change in distance between the first compensator rollers will effect a change in length of the part of the string of interconnected pouches in the first compensator unit.

The first compensator unit may be able to compensate changes in length of the string of interconnected pouches between the first compensator rollers passively, for example where the rollers are pretensioned by elastic members to maintain a certain constant tension in the string of interconnected pouches. Alternatively or additionally, the first compensator unit may comprise controlled actuators for actively moving the first compensator rollers to adjust the length of the part of the string of interconnected pouches in the first compensator unit.

In a preferred embodiment, the production system moves the string of interconnected pouches along the transport direction intermittently, e.g. stepwise, wherein the string of interconnected pouches is transported one or more discrete pouch positions in the transport direction, i.e. a group of four pouches is in each cycle moved four pouch positions in the transport direction, such that first the first bottom sealing unit can seal a bottom region of the pouches of that group and wherein the production system moves the pouches in the transport direction such that the second bottom sealing unit can seal a bottom region of the pouches of that group.

When the string of interconnected pouches is moved intermittently, the relative position of the pouches with respect to the sealing jaws can be adjusted during each movement. During a first movement, the pouch position can be measured, for example, after which the first drive unit can control the movement during a second movement in dependence of the measurement, whereby a feedback position measurement can be performed during the second movement to determine whether the adjusted position has improved the alignment.

It is also envisaged that the production system is configured to transport the string of interconnected pouches continuously in the transport direction, wherein for example the bottom heat-sealing devices are configured to move in the transport direction, such that during a sealing cycle of the first and second sealing units the sealing units move at the same speed in the same direction as the pouches, wherein after the sealing cycle has been completed the jaws open and the sealing units move back to an starting position to clamp and seal the next group of pouches.

During continuous movement of the string of interconnected pouches, the bottom heat-sealing devices will move along with the pouches during sealing. The first pouch position sensor may, but not necessarily needs to, move along with the bottom heat-sealing devices to measure the alignment with the pouches. For adjusting the alignment, the first drive motor may temporarily alter the velocity at which the pouches are moved through the production system, i.e. preferably during a return cycle of the bottom heat-sealing devices, e.g. after the sealing has completed, in order to adjust the alignment for a subsequent sealing step, whilst still continuing movement of the pouches through the production system.

In the continuous string of interconnected pouches the side edge of each pouch is adjacent and connected to a side edge of a different pouch. Before the bottom heat-sealing device has sealed the bottom regions of the pouches no distinct first and second pouches can be identified in the roll of heat-sealable film material, however, reference will be made to distinct pouches and pouch positions throughout the whole production system.

In an embodiment, the production system comprises a single frame onto which all of the sealing devices and the film material drive devices of the film material drive are mounted. The single frame may provide that all sealing devices are rigidly connected to each other, so that their mutual positions can be safeguarded.

In an embodiment, the first pouch position sensor is an optic sensor, for example a photocell, which faces the first or second wall of the film material for detecting optic marks, for example eye marks, on some or each of the pouches. These eye marks are typically provided on the film material during printing thereof, so that a position of the printing patterns on the film material can be aligned on the basis of the eye marks. The pouch position sensors are configured to detect these eye marks, so that the alignment by the drive unit can be based thereon, to make sure that positions of the pouch's seals, i.e. by which individual pouches are formed out of the film material, will correspond to the printing.

In an embodiment, the bottom heat-sealing device comprises multiple of the bottom sealing units, and the first pouch position sensor is positioned in between the bottom sealing units. The placement of the first pouch position sensor in between the bottom sealing unit may be preferred, as this may minimize accumulated errors in positioning measurements. Hence, at the position of the first pouch position sensor, the positioning is assumed to be 'exact'. Thus, when the first pouch position sensor is placed in between the bottom sealing units, a positioning error accumulates only over the width of half the number of bottom sealing units. In case the bottom heat-sealing device for example comprises four bottom sealing units, the pouch position sensor can be adjoined by two bottom sealing units on opposed ends. In contrast, a positioning of the sensor on the left or right side of the bottom heat-sealing device would provide that the positioning error accumulates over the width of four sealing units.

Nonetheless, in embodiments, the first pouch position sensor can be positioned upstream of the bottom sealing units or can be positioned downstream of the bottom sealing units, i.e. positioned in between the bottom sealing units and the first drive unit.

In an embodiment, the film material drive further comprises a second film material drive device, which is, seen along the transport direction, arranged downstream of the side edge heat-sealing device, and which comprises:
- a second drive unit for pulling the string of interconnected pouches comprising a second drive motor and a second controller to control the second drive motor, for example the second drive motor is associated with a pair of second drive rollers between which the string of interconnected pouches is clamped, and
- a second pouch position sensor, located upstream of the second drive unit, configured to emit a second sensor signal for determining a position relative to the transport direction (T) of the string of interconnected pouches for the purpose of alignment of individual pouches in relation to the one or more side edge sealing units.

The second controller of the second drive unit is configured to control the second drive motor on the basis of the second sensor signal to align the individual pouches with the one or more side edge sealing units.

The features and benefits explained above for the first film material drive device also apply for the second film material drive device, where it is to be understood that all references to the sealing device then concern the side edge heat-sealing device.

The second film material drive device is positioned remotely from the first film material drive device, but operates in a similar manner. However, the second film material drive device serves to adjust the position of the pouches relative to the side edge sealing units, to ensure that the pouches are aligned with the side edge sealing units.

In an embodiment, the second pouch position sensor is an optic sensor, for example a photocell, that faces the first or second wall of the film material for detecting optic marks, for example eye marks, on some or each of the pouches.

In an embodiment, the side edge heat-sealing device comprises multiple of the side edge sealing units, and the second pouch position sensor is positioned in between the side edge sealing units.

In an embodiment, the second drive unit is controllable independently of the first drive unit, to accommodate for a first stretching elongation of the first and second walls of film material in the bottom heat-sealing device and a second stretching elongation of the first and second walls of film material in the side edge heat-sealing device, different from the first stretching elongation.

According to this embodiment, the independent controlling of the respective drive units allows that the movements of the pouches in the bottom heat-sealing device and the side edge heat-sealing device can be adjusted to the degree of stretching in the respective sealing devices, since stretching can differ per type of sealing device.

In an embodiment, the production system further comprises a third heat-sealing device, e.g. top edge sealing device, located downstream of the side edge heat-sealing device and configured to heat seal third regions, e.g. top edge regions of one or more of the pouches.

The second film material drive device may further comprise a second compensator unit for accommodating and varying a second portion of the string of interconnected pouches in order to allow a shift in mutual position between the individual pouches in the string of interconnected pouches at the top edge sealing device and the individual pouches in the string of interconnected pouches at the side edge heat-sealing device.

The second compensator unit may comprise a plurality of second compensator rollers over which a portion of the string of interconnected pouches is guided and which are movable to increase or decrease a length of the second portion of the string of interconnected pouches guided over the second compensator rollers.

The second compensator unit serves in a manner similar to the first compensator unit for at least temporarily accumulating a part of the length of the string of interconnected pouches downstream of the side edge heat-sealing device and upstream of the top edge sealing device.

The features and benefits explained above for the first compensator unit also apply for the second compensator unit, where it is to be understood that all references to the drive unit and pouch position sensor then respectively concern the second drive unit and second pouch position sensor.

In an embodiment, the production system comprises a cooling unit configured to cool the sealed regions of the pouches, preferably wherein the cooling unit is arranged downstream of the side edge heat-sealing device.

In an embodiment, the master drive unit may be located downstream of the cooling unit, when seen in the transport direction, so that the string of interconnected pouches has been cooled when it passes through the master drive unit. The cooled film material of the pouches may be able to better withstand the pulling forces by the master drive unit, so that deformations of the pouches may be reduced. Furthermore, the degree of stretching maybe reduced, in order to improve the alignment of the string of interconnected pouches with further sealing devices, such as the top edge sealing device, that are located downstream of the second film material drive device.

In an embodiment, the bottom heat-sealing device, the one or more bottom sealing units of the bottom heat-sealing device, and optionally the side edge heat-sealing device, and optionally the one or more side edge sealing units of the side edge heat-sealing device, are movable along the transport direction. This allows the bottom heat-sealing device and the side edge heat-sealing device to seal pouches of different sizes. For example, the distance between bottom sealing units and side edge sealing units can be increased to accommodate wider pouches.

In an embodiment, the sealing faces of the one or more bottom sealing units and optionally the sealing faces of the one or more side edge sealing units are embodied as induction heatable members, preferably impulse conduction heatable members. Impulse conduction heatable members allow for a very fast increase in temperature of the heatable member which is maintained for a very short duration.

In an embodiment, the one or more bottom sealing units and optionally the one or more side edge sealing units each comprise a cooling member, which is configured to cool the one or more sealing faces, e.g. induction heatable members.

In an embodiment, each pouch comprises:
- a first wall and a second wall which are opposed to each other,
- a bottom gusset which comprises a first bottom gusset wall part and a second bottom gusset wall part connected to each other along a folding line, wherein the bottom gusset is located below the folding line and between the first wall and the second wall, and
- a first side edge and a second side edge,

wherein the string of interconnected pouches comprises first pouches and second pouches, wherein the first and second pouches are alternating, and wherein one or more first pouches and one or more second pouches form a group, e.g. wherein two first pouches and two second pouches form a group,
wherein the bottom heat-sealing device comprises a first bottom sealing station and a second bottom sealing station arranged downstream of the first bottom sealing station in the transport direction,
wherein each of the first and second bottom sealing stations comprises one or more bottom sealing units, e.g. two units, wherein each bottom sealing unit comprises:
   - a first bottom sealing jaw,
   - a second bottom sealing jaw,
wherein each bottom sealing station, e.g. each bottom sealing unit, comprises an actuator device configured to move the first and/or second bottom sealing jaws relative to one another between an opened position and a clamped position,
wherein the first and second bottom sealing jaw each comprise a sealing face which is configured to project across a bottom region of the bottom gusset of a pouch and across a first side edge section of the first side edge and a second side edge section of the second side edge of said pouch, as well as across an adjoining side edge section of each adjacent pouch,
wherein the side edge sections each extend from below to above the folding line,
wherein each bottom sealing unit of the first bottom sealing station is configured to, in a cycle, heat-seal:
   - the bottom region of a first pouch of the group,
   - the first side edge section of the first side edge and the second side edge section of the second side edge of said first pouch of the group,
   - a second side edge section of the adjoining second side edge of the upstream adjacent second pouch,
   - a first side edge section of the adjoining first side edge of the downstream adjacent second pouch,
wherein each bottom sealing unit of the second bottom sealing station is configured to, in a cycle, heat-seal:
   - the bottom region of a second pouch of the group,
   - the first side edge section of the first side edge and the second side edge section of the second side edge of said second pouch of the group,
   - a second side edge section of the adjoining second side edge of the upstream adjacent first pouch,
   - a first side edge section of the adjoining first side edge of the downstream adjacent first pouch.

According to this embodiment, the system can be configured and operated such that the bottom heat-sealing device seals the bottom region of the pouch just one time and seals the side edge sections of the side edges of each pouch twice. The triple point is therefore sealed two times by the bottom heat-sealing device. This approach provides, in an effective manner, a high quality and secure seal at the triple point, decreasing the chance of a (minuscule) leak at the triple point. In embodiments, as explained herein, a side edge heat-sealing device of the system seals the entire side edge, including the side edge section, so that the triple point is sealed three times.

Due to the design of the first and second bottom sealing stations, preferably in combination with a side edge heat sealing device, it is - as preferred in the context of this application - not needed to provide a dedicated triple point sealing device arranged downstream of the bottom heat-sealing device to provide an additional seal at and in proximity of the triple point. The production system can therefore be shortened in length compared to known production systems.

The film material drive of the production system is configured and operated to transport the string of interconnected pouches in the transport direction past at least the bottom heat-sealing device, preferably also past the side edge heat-sealing device. In the string of interconnected pouches, the side edges of neighboring pouches adjoin one another. In a preferred embodiment, the string of interconnected pouches is moved intermittently, so stepwise, along the transport direction, wherein the string of interconnected pouches is transported one or more discrete pouch positions in the transport direction, e.g. over the length of a group of pouches. For example, when groups of four pouches are present, the string is intermittently moved over four pouch positions in the transport direction past the heat-sealing device(s).

The production system according to this embodiment may provide for additional synergistic effects, since the combination of dedicated controllable drive units at each of the sealing devices and the overlap in bottom sealing and side edge sealing may provide for improved sealing quality of the pouches, whereas the relatively low degree of stretching will prevent the film material, especially mono-material film materials, from rupturing during pulling.

In an embodiment, the production system is configured to move the string of interconnected pouches intermittently, e.g. stepwise along the transport direction, wherein the string of interconnected pouches is transported one or more discrete pouch positions in the transport direction. For example, a group of four pouches is during each movement moved four pouch positions in the transport direction, such that first the first bottom sealing unit can seal a bottom region of the pouches of that group and wherein the production system moves the pouches in the transport direction such that the second bottom sealing unit can seal a bottom region of the pouches of that group.

It is also envisaged that the string of interconnected pouches is transported continuously in the transport direction, wherein for example the bottom heat-sealing devices are configured to move in the transport direction, such that during a sealing cycle of the first and second sealing stations the sealing stations move at the same speed in the same direction as the pouches, wherein after the sealing cycle has been completed the jaws open and the first and second sealing stations move back to an starting position to clamp and seal the next group of pouches.

In embodiments, the pouches may comprise one or more gussets at their sides. Accordingly, the film material may be folded to obtain such folded lobes of film material and the corresponding sealing jaws, e.g. the side sealing jaws, may be configured to seal the side gussets.

In an embodiment, the side edge heat-sealing device is configured to seal the side edges of the pouches, e.g. such that the side portions are sealed three times, preferably wherein the side edge heat-sealing device is positioned downstream of the bottom heat-sealing device.

According to the first aspect, the present invention further provides a method for producing flexible pouches, preferably flexible stand-up pouches, e.g. comprising a gusset, made from a heat-sealable film material, preferably a metal-free heat-sealable film material,
wherein use is made of a production system as discussed herein, which comprises the bottom heat-sealing device, the side edge heat-sealing device and the film material drive,
wherein the method comprises the steps of:
   - pulling, with the film material drive, the string of interconnected pouches past the bottom heat-sealing device and the side edge heat-sealing device in a transport direction,
   - heat sealing the respective bottom regions of one or more of the pouches with the bottom heat-sealing device,
   - heat-sealing the side edge regions of one or more of the pouches with the side edge heat-sealing device,
wherein the step of pulling comprises the steps of:
   - determining, with the first pouch position sensor of the first film material drive device, alignment positions of individual pouches in the string of interconnected pouches in relation to the one or more bottom sealing units and emitting a first sensor signal on the basis thereof,
   - controlling the first drive unit, e.g. the first drive motor thereof, of the first film material drive device on the basis of the first sensor signal to align the individual pouches with the one or more bottom sealing units, and
   - accumulating a part of the string of interconnected pouches downstream of the bottom sealing device and upstream of the side edge heat-sealing device, e.g. by guiding a portion of the string of interconnected pouches over the plurality of first compensator rollers of the first compensator unit and allowing the first compensator rollers to move to increase or decrease a length of the portion of the string of interconnected pouches guided along the first compensator rollers and to accommodate a shift in mutual position between the individual pouches in the string of interconnected pouches at the side edge heat-sealing device and the individual pouches in the string of interconnected pouches at the bottom heat-sealing device.

In the present method, use is made of the first pouch position sensor to measure a position of the pouches, which represents a relative position between the pouches and the bottom sealing jaws. The first drive unit is associated with the first pouch position sensor, so as to control the pulling of the string of interconnected pouches in dependence of the measured relative position. In case the measured position indicates that the pouches project somewhat upstream in relation to the bottom sealing unit, the first drive unit may be controlled to pull the string of interconnected pouches over a larger length, to move the pouches in alignment with the bottom sealing units, or vice versa in case the pouches project downstream. The first pouch position sensor is located at the bottom heat-sealing device, for example in between the bottom sealing unit or in front of the bottom sealing units, so that the measured pouch position accurately indicates the actual position of the pouches at the bottom sealing units for the sealing of the bottom sealing regions.

A further benefit of the present method is that the first pouch position sensor and associated first drive unit may allow the movement of the pouches to be adjusted to the degree of stretching, even though the degree of stretching normally differs per type of sealing device. Hence, in the bottom heat-sealing device, parts of the pouches are heated that normally comprise four layers of film material, i.e. two other walls and two bottom gusset walls. This differs from side edge heat-sealing devices or top edge sealing devices, where typically two layers of film material are provided. As a result, the stretching will be different between these sealing devices when a single downstream drive unit were to be provided. According to the present invention, the pouch positions in the respective sealing devices are adjusted in dependence of their degree of stretching, thus allowing for improved alignment in all sealing devices.

In a preferred embodiment, the string of interconnected pouches is transported along the transport direction intermittently, e.g. stepwise, wherein the string of interconnected pouches is transported one or more discrete pouch positions in the transport direction, i.e. a group of four pouches is in each cycle moved four pouch positions in the transport direction, such that first the first bottom sealing unit can seal a bottom region of the pouches of that group, e.g. of one or more first pouches in the group, and wherein the production system moves the pouches in the transport direction such that the second bottom sealing unit can seal a bottom region of the pouches of that group, e.g. of one or more second pouches in the group.

It is also envisaged that, in embodiments, the string of interconnected pouches is transported continuously in the transport direction, wherein for example the bottom heat-sealing devices are configured to move in the transport direction, such that during a sealing cycle of the first and second sealing units the sealing units move at the same speed in the same direction as the pouches, wherein after the sealing cycle has been completed the jaws open and the sealing units move back to an starting position to clamp and seal the next group of pouches.

In an embodiment, the step of pulling further comprises the steps of:
- determining, with the second pouch position sensor of the second film material drive device, alignment positions of individual pouches in the string of interconnected pouches in relation to the one or more side edge sealing units and emitting a second sensor signal on the basis thereof, and
- controlling the second drive unit, e.g. the second drive motor thereof, of the second film material drive device on the basis of the second sensor signal to align the individual pouches with the one or more side edge sealing units.

In an embodiment, the controlling of the second drive unit is carried out independently of the controlling of the first drive unit, to accommodate for a first stretching elongation of the first and second walls of film material in the bottom heat-sealing device and a second stretching elongation of the first and second walls of film material in the side edge heat-sealing device, different from the first stretching elongation.

According to a second aspect, the present invention provides a production system for the production of flexible pouches, preferably flexible stand-up pouches, the pouches each having a pouch body made from heat-sealable film material, preferably a metal-free heat-sealable film material, wherein the production system comprises a bottom heat-sealing device,
wherein each pouch body comprises:
   - a first wall and a second wall which are opposed to each other,
   - a bottom gusset which comprises a first bottom gusset wall part and a second bottom gusset wall part connected to each other along a folding line, wherein the bottom gusset is located below the folding line and between the first wall and the second wall, and
   - a first side edge and a second side edge,
wherein the production system comprises a film material drive which is configured to transport a string of interconnected pouches during production thereof along at least the bottom heat-sealing device in a transport direction, e.g. intermittently,
wherein the string of interconnected pouches comprises first pouches and second pouches, wherein the first and second pouches are alternating, and wherein one or more first pouches and one or more second pouches form a group, e.g. wherein two first pouches and two second pouches form a group,
wherein the bottom heat-sealing device comprises a first bottom sealing station and a second bottom sealing station arranged downstream of the first bottom sealing station in the transport direction,
wherein each of the first and second bottom sealing stations comprises one or more bottom sealing units, e.g. two units, wherein each bottom sealing unit comprises:
   - a first bottom sealing jaw ,
   - a second bottom sealing jaw,
wherein each bottom sealing station, e.g. each bottom sealing unit, comprises an actuator device configured to move the first and/or second bottom sealing jaws relative to one another between an opened position and a clamped position,
wherein the first and second bottom sealing jaw each comprises a sealing face which is configured to project across a bottom region of the bottom gusset of a pouch and across a first side edge section of the first side edge and a second side edge section of the second side edge of said pouch, as well as across an adjoining side edge section of each adjacent pouch,
wherein the side edge sections each extend from below to above the folding line,
wherein each bottom sealing unit of the first bottom sealing station is configured to, in a cycle, heat-seal:
   - the bottom region of a first pouch of the group,
   - the first side edge section of the first side edge and the second side edge section of the second side edge of said first pouch of the group,
   - a second side edge section of the adjoining second side edge of the upstream adjacent second pouch,
   - a first side edge section of the adjoining first side edge of the downstream adjacent second pouch,
wherein each bottom sealing unit of the second bottom sealing station is configured to, in a cycle, heat-seal:
   - the bottom region of a second pouch of the group,
   - the first side edge section of the first side edge and the second side edge section of the second side edge of said second pouch of the group,
   - a second side edge section of the adjoining second side edge of the upstream adjacent first pouch,
   - a first side edge section of the adjoining first side edge of the downstream adjacent first pouch.

The system can be configured and operated such that the bottom heat-sealing device seals the bottom region of the pouch just one time and seals the side edge sections of the side edges of each pouch twice. The triple point is therefore sealed two times by the bottom heat-sealing device. This approach provides, in an effective manner, a high quality and secure seal at the triple point, decreasing the chance of a (minuscule) leak at the triple point. In embodiments, as explained herein, a side edge heat-sealing device of the system seals the entire side edge, including the side edge section, so that the triple point is sealed three times.

Due to the design of the first and second bottom sealing stations, preferably in combination with a side edge heat-sealing device, it is - as preferred in the context of this application - not needed to provide a dedicated triple point sealing device arranged downstream of the bottom heat-sealing device to provide an additional seal at and in proximity of the triple point. The production system can therefore be shortened in length compared to known production systems.

The film material drive of the production system is configured and operated to transport the string of interconnected pouches in the transport direction past at least the bottom heat-sealing device, preferably also past the side edge heat-sealing device. In the string of interconnected pouches, the side edges of neighboring pouches adjoin one another. In a preferred embodiment, the string of interconnected pouches is moved intermittently, so stepwise, along the transport direction, wherein the string of interconnected pouches is transported one or more discrete pouch positions in the transport direction, e.g. over the length of a group of pouches. For example, when groups of four pouches are present, the string is intermittently moved over four pouch positions in the transport direction past the heat-sealing device(s).

It is also envisaged that, in an embodiment, the film material drive of the production system is configured and operated to transport the string of interconnected pouches continuously in the transport direction. Herein, for example, the sealing devices and/or sealing stations and/or sealing units are configured and operated to be moved reciprocating along the transport direction, such that the sealing units move at the same speed and in the same direction as the string of pouches during a heat-sealing cycle. At the end of the cycle, when the seals have been completed and the sealing jaws open, the sealing units move back to a starting position to clamp and seal the next group of pouches whilst in motion in transport direction.

The bottom sealing jaws will in practical embodiments be in the opened position in order to align the group(s) of pouches in the string with the jaws of the bottom sealing units in the transport direction by the film material drive. Once the pouches are positioned correctly, the actuator device(s) move the bottom sealing jaws of the units to the clamped position.

Each bottom sealing unit of the first bottom sealing station is configured and operated to, in a cycle, heat-seal:
- the bottom region of a first pouch of the group,
- the first side edge section of the first side edge and the second side edge section of the second side edge of said first pouch of the group,
- a second side edge section of the adjoining second side edge of the upstream adjacent second pouch,
- a first side edge section of the adjoining first side edge of the downstream adjacent second pouch.

Each bottom sealing unit of the second bottom sealing station is configured and operated to, in a cycle, heat-seal:
- the bottom region of a second pouch of the group,
- the first side edge section of the first side edge and the second side edge section of the second side edge of said second pouch of the group,
- a second side edge section of the adjoining second side edge of the upstream adjacent first pouch,
- a first side edge section of the adjoining first side edge of the downstream adjacent first pouch.

The first side edge sections and the second side edge sections which are heat-sealed by the bottom heat-sealing device each extend from below to above the folding line of the bottom gusset. For example, the first and second side edge sections extend from a lower edge of the bottom gusset of the pouch to above the folding line.

The production system according to the first and second aspect of the invention, as well as the associated method, may be readily combined within the teaching of the present application. Features and/or benefits disclosed herein in relation to the first aspect of the invention may apply for the second aspect of the invention and vice versa.

The invention will now be discussed with reference to the figures. In the figures:
Fig. 1 shows highly schematically an embodiment of the production system according to the present invention,
Figs. 2a, b show a front view of the pouch,
Fig. 3 shows schematically a cross-section of the bottom gusset of the pouch shown in Figs. 2a, b,
Figs. 4a, b show different views of a bottom sealing unit,
Fig. 4c shows schematically a side edge sealing unit,
Figs. 5a, b show a schematic view of a group of pouches being heat sealed by the first and second bottom sealing stations,
Figs. 6a, b show a schematic view of a group of pouches being heat sealed by the first and second side edge sealing stations.

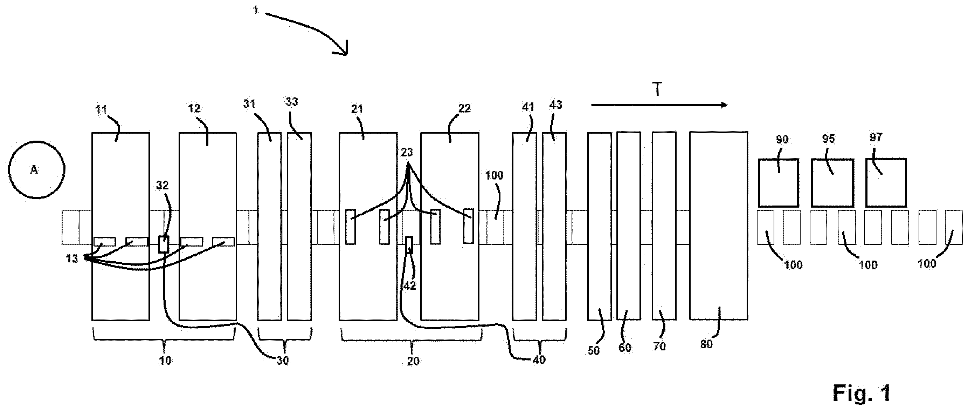

Figure 1 shows schematically the production system 1 for the production of flexible stand-up pouches 100 having a pouch body which is made from a heat-sealable film material.

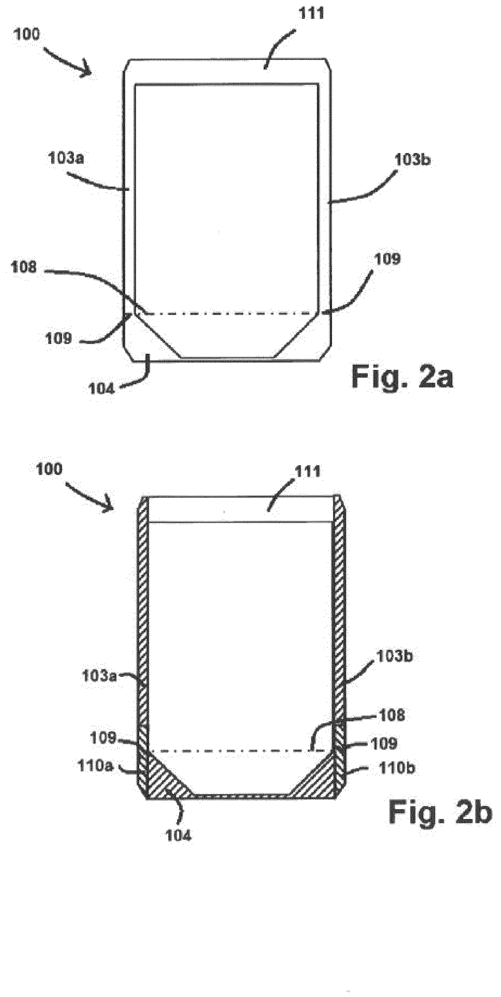

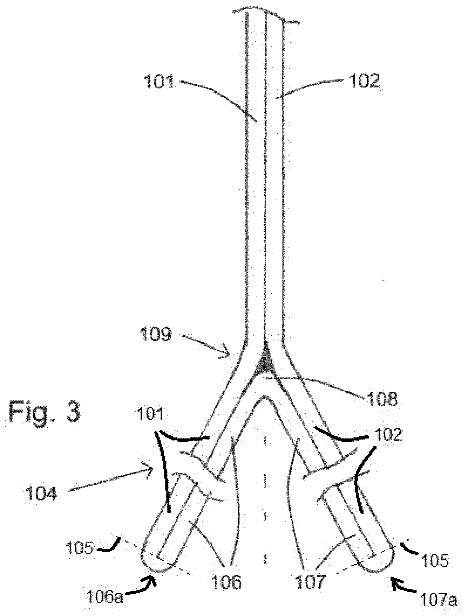

As shown, e.g. in Figures 2a, 2b and 3, each produced pouch 100 has a pouch body with a first wall 101 and a second wall 102, the first wall 101 and the second wall 102 being opposed to each other. These walls could also be called the main walls of the pouch.

The pouch 100 has a first side edge 103a and a second side edge 103b, and a top edge region 111.

For example, not shown, a fitment, e.g. a spout with closure device, is present, e.g. at the top of the pouch 100. For example, a plastic spout has an attachment portion which is heat-sealed between opposed top edges of the walls 101, 102. Examples are disclosed in WO03/031280, WO2014/007612, WO2017/135824, WO2021/160675, WO2022/079154, etc.

The pouch 100 further comprises a bottom gusset at the bottom side, e.g. to form a flexible stand-up pouch.

The bottom gusset includes a first bottom gusset wall part 106 and a second bottom gusset wall part 107 which are connected to each other along a folding line 108. The bottom gusset is generally located below the folding line 108 and between the first wall 101 and the second wall 102.

In this example, the bottom gusset is embodied as a folded bottom gusset with the walls 101, 102, and the wall parts 106, 107 forming one continuous web of film material.

For example, the production system 1 comprises at the position A in Figure 1 a film supply device which is adapted to receive one or more rolls of flexible heat-sealable film material. The film material is unwound from a roll and passes to a bottom gusset folding device to fold the film material dispensed from a roll into a folded shape, so that two pouch walls 101, 102 oppose one another and so that the bottom has a bottom gusset. This is known in the art.

It is noted that, in embodiments, the production system may also be configured such that each of the side walls 101, 102, as well the bottom gusset with portions 106, 107, are made from distinct webs of film material as depicted in Figure 3 with dashed lines 105.

As shown, preferably, the production system 1 has a horizontal path and transport direction T along the devices and stations of the system.

As is known in the art, a triple point 109 is present at each side edge 103a, 103b of the pouch 100. As can be seen in Figure 3, above the triple point 109 the first wall 101 and the second wall 102 are in direct contact with each other along the side edge. Below the triple point 109 the two gusset wall parts 106, 107 are located between the first wall 101 and the second wall 102. Thus, at the triple point 109 the thickness changes between two times the wall thickness and four times the wall thickness.

The pouches 100 are initially formed as a string of interconnected pouches.

The production system 1 comprises a bottom heat-sealing device 10.

The bottom heat-sealing device 10 has a first bottom sealing station 11 and a second bottom sealing station 12, which are arranged in series in the transport direction T.

Each of the first bottom sealing station 11 and the second bottom sealing station 12 comprises one or more bottom sealing units 13, here a pair of sealing units 13, 13 of station 11 and a pair of sealing units 13 of the station 12.

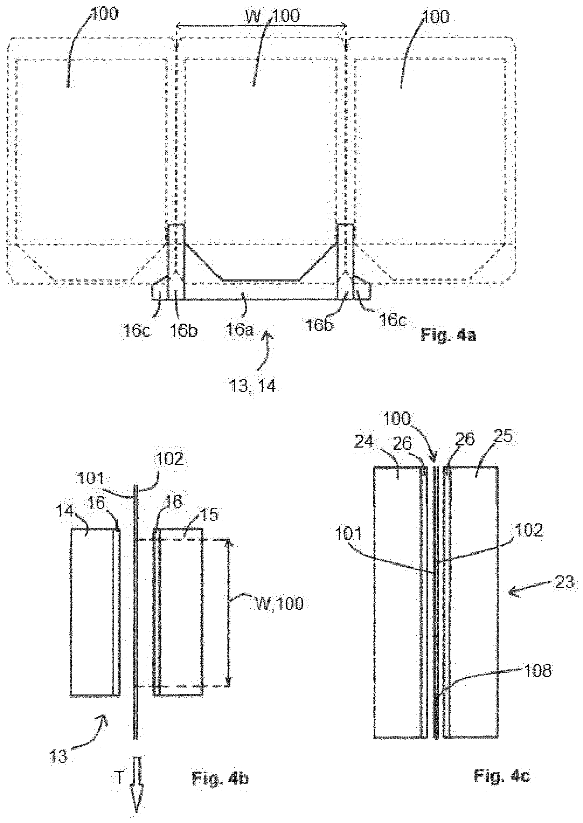

Each bottom sealing unit 13, e.g. as schematically shown in Figures 4a, 4b, comprises:
- a first bottom sealing jaw 14, and
- a second bottom sealing jaw 15, and
- an actuator device configured to move the first bottom sealing jaw 14 and second bottom sealing jaw 15 relative to one another between an opened position and a clamped position.

In embodiments, each sealing station 11, 12 comprises a main actuator device for multiple bottom sealing units 13 of each station.

The first bottom sealing jaw 14 and the second bottom sealing jaw 15 each comprise a sealing face 16.

Each of the sealing units 13 may be configured and operated such that the sealing faces of the jaws have a constant elevated heat-sealing temperature, e.g. each jaw 14, 15 comprising a heating element, e.g. an electric heating element, to maintain an elevated heat-sealing temperature.

In embodiments, the bottom heat-sealing device 10, station(s) 11, 12, and/or bottom sealing unit(s) 13, comprise(s) a spacer member arranged to keep the gusset wall parts 106, 107 separated from one another during sealing. This could, for example, be a plate-like spacer member.

These sealing faces 16 of the jaws 14, 15 each project across a bottom region 104 of the bottom gusset of one pouch by means of portion 16a which extend in the direction of the width W of the pouch between face portions 16b. Each of the face portions 16b not only projects across a side edge section 110a, 110b of one of the side edges of the one pouch, but additionally also across an adjacent side edge section 11 0b, 110a of an adjacent pouch, see e.g. Figure 4a. So, in contrast to traditional prior art arrangements, the sealing faces 16 of a pair of jaws 14, 15 not only heat-seal the side edge sections of one pouch as well as the bottom region of the one pouch, but also the adjacent side edge section of the pouch upstream and of the pouch downstream of the one pouch, seen in transport direction.

Herein, each side edge section 110a, 110b which is heat-sealed by the pair of jaws 14, 15 extends from below the folding line 108 to above the folding line 108, so over the triple point 109, see figures. In embodiment, such a sealed side edge section 110a, 110b extends from the lower edge to above the folding line 108. In another embodiment, the sealed side edge section starts at a distance from the lower edge 106a, 107a, yet still below the folding line 108.

In Figure 2b the hatching schematically illustrates that a side edge section 110a, 110b extends only over a fraction of the length of the respective side edge above the folding line 108/triple point 109. For example, the length of the section 110a, 110b above the triple point 109 is at least 1 centimeter, e.g. between 1 centimeter and 3 centimeters.

In Figure 2b the hatching above the side edge sections is in a different direction, which serves to illustrate that here the side edge heat-sealing device 20 has applied a single heat-seal between the walls 101, 102 along the side edges 103a, 103b, preferably said heat-seal also extending over the side edge sections 110a, 110b.

Figure 4a serves to illustrate an example of a jaw 14 of a bottom sealing unit 13 in relation to three adjacent pouches 100 of the string of interconnected pouches. Jaw 15 (not shown) may be embodied as jaw 14.

The sealing face 16 includes the following face portions:
- central face portion 16a which serves to heat-seal the side wall of the pouch to the respective bottom gusset wall part across the bottom region 104,
- side face portions 16b adjoining the central face portion 16a downstream and upstream.
Herein the side face portions 16b each are configured to not only heat-seal the side edge section 110a, 110b of the one pouch of which the bottom region 104 is heat-sealed by the jaw, but also to heat-seal the adjoining side edge sections of the two adjoining pouches.

In an embodiment, the sealing face 16 only has the side face portions 16b and not the central face portion 16a.

The Figure 4a also illustrates, as optional feature, the presence of lateral extension face portions 16c which extend downstream and upstream away from a face portion 16a and serve to seal a lower edge section at the lower end of the bottom region 104 of the adjacent pouch 100.

The two face portions 16b are configured to seal side edge sections 110a, 110b of the two side edges 103a, 103b of the central pouch in Figure 4a and to simultaneously seal side edge sections 110a, 110b of adjacent side edges 103a, 103b of two adjacent pouches 100 in Figure 4a. As shown, the side edge sections 110 here extend from a lower edge of the pouch to a location above the folding line 108, yet only over a fraction or minor part of the side edge.

When the actuator device moves the jaws 14, 15 of a unit 13 into the clamped position, the sealing faces 16 of the jaws 14, 15 cause heat-sealing in the following regions:
- the first wall 101 and the second wall 102 of one pouch 100 are sealed directly together in the side edge section 110a, 110b above the triple point 109,
- the first wall 101 of the pouch is sealed to the first gusset portion 106 in the side edge section below the triple point 109,
- the second wall 102 of the pouch is sealed to the second gusset portion 107 in a section of the side edge section below the triple point 109,
- the first wall 101 of the pouch is sealed to the first gusset portion 106 in a bottom region 104 which extends between the side edge sections,
- the second wall 102 of the pouch is sealed to the second gusset portion 107 in a bottom region 104 which extends between the side edge sections.

So, each side edge section 110a, 110b extends from below the triple point 109, over the triple point 109, to above the triple point 109.

At the same time, due to the configuration of the jaws 14, 15, there is a heat-sealing in one side edge region of the pouch which is directly adjacent and downstream of the one pouch and in one side edge region of the pouch which is directly adjacent and upstream of the one pouch, seen in the transport direction T. In more detail, this additional heat-sealing concerns:
- sealing directly together - in a portion of side edge section 110a, 110b above the triple point 109 and directly adjacent the one pouch - the first wall 101 and the second wall 102 of the upstream pouch and of the downstream pouch, and
- for each of the upstream pouch and the downstream pouch, sealing the first wall 101 of the pouch to the first gusset portion 106 in a section of the side edge section below the triple point 109,
- for each of the upstream pouch and the downstream pouch, sealing the second wall 102 of the pouch to the second gusset portion 107 in a portion of the side edge section below the triple point 109.

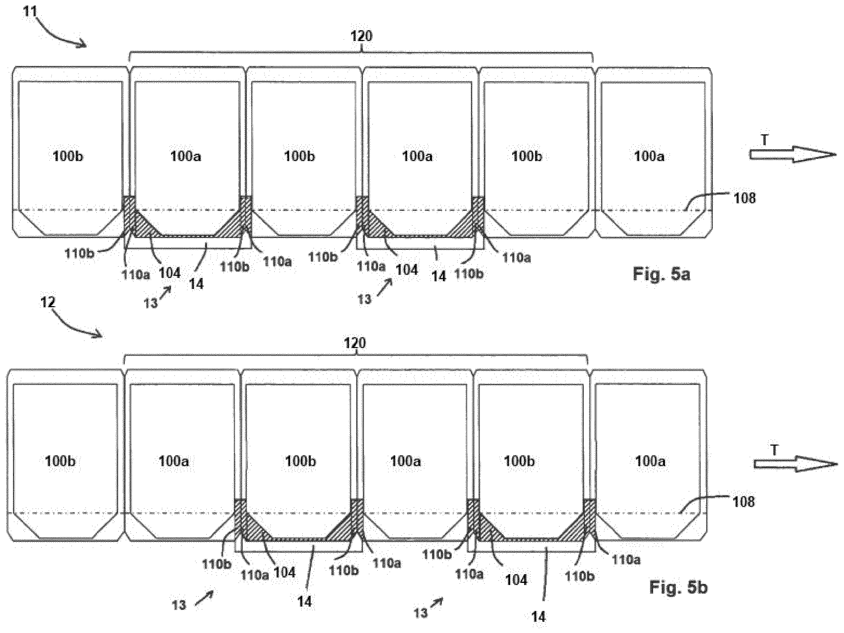

The regions sealed by the bottom sealing jaws 14, 15 of units 13 can be readily recognized in the Figures 5a, 5b, where these regions are indicated by hatching.

The production system 1 further comprises a side edge heat-sealing device 20 configured to heat-seal side edge regions 103a, 103b of the pouches 100.

The side edge heat-sealing device 20 is arranged downstream of the bottom heat-sealing device 10.

The side edge heat-sealing device 20 has a first side edge sealing station 21 and a second side edge sealing station 22. Each of the first side edge sealing station 21 and second side edge sealing station 22 comprises one or more side edge sealing units 23.

Each side sealing unit 23 comprises:
- a first side edge sealing jaw 24,
- a second side edge sealing jaw 25,
- an actuator device configured to move the first and second side edge sealing jaws 24, 25 relative to one another between an opened position and a clamped position.

In embodiments, each sealing station 21, 22 comprises a main actuator device for multiple side edge sealing units 23 of the station.

The first side edge sealing jaw 24 comprises a sealing face 26 which is configured to simultaneously contact and seal the adjoining first and second side edges 103a, 103b of the two adjacent interconnected pouches 100.

The second side edge sealing jaw 25 comprises a sealing face 26 which is configured to simultaneously contact and seal the adjoining first and second side edges 103a, 103b of the two adjacent interconnected pouches 100.

As known in the art, each sealing face may have a non-stick covering, e.g. of PTFE, to avoid or reduce adherence to the film material.

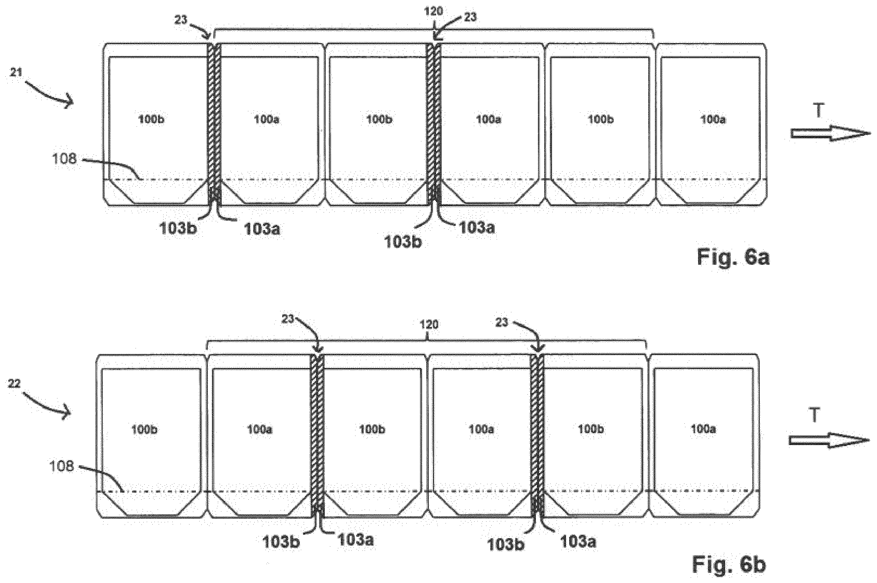

As shown in Figures 1 and 6a-b, the first side edge sealing station 21 and the second side edge sealing station 22 each have two side sealing units 23.

The production system 1 further comprises a film material drive 30, 40, 70, which is configured to pull the string of interconnected pouches past the bottom heat-sealing device 10 and the side edge heat-sealing device 20 in transport direction T.

The side edge heat-sealing device 20 is, seen along the transport direction T, arranged downstream of the bottom heat-sealing device 10.

The film material drive comprises a first film material drive device 30, which is arranged downstream of the bottom heat-sealing device 10 and upstream of the side edge heat-sealing device 20.

The first material drive device 30 comprises:
- a first drive unit 31 for pulling the string of interconnected pouches, the unit 31 comprising a pair of first drive rollers between which the string of interconnected pouches is clamped and an associated first drive motor,
- a first pouch position sensor 32, located upstream of the first drive unit 31, configured to emit a first sensor signal for determining alignment positions of individual pouches 100 in the string of interconnected pouches in relation to the one or more bottom sealing units 13, and
- a first compensator unit 33 for accommodating and varying a first portion of the string of interconnected pouches in order to allow a shift in mutual position between the individual pouches 100 in the string of interconnected pouches at the side edge heat-sealing device 20 and the individual pouches 100 in the string of interconnected pouches at the bottom heat-sealing device 10.

The first drive device 30 is configured to control the first drive motor on the basis of the first sensor signal to align the individual pouches with the bottom sealing units 13.

The first compensator unit 33 comprises a plurality of movable first compensator rollers over which a portion of the string of interconnected pouches is guided and which are movable to increase or decrease a length of the portion of the string of interconnected pouches guided over the first compensator rollers.

In an embodiment, the first pouch position sensor 32 is an optic sensor, for example a photocell, which faces the first or second wall 101, 102 of the film material for detecting optic marks, for example eye marks, on some or each of the pouches 100.

The first pouch position sensor 32 is positioned in between the first and second bottom sealing station 11, 12.

A second film material drive device 40 is arranged downstream of the side edge heat-sealing device 20. The second film material drive device 40 comprises:
- a second drive unit 41 for pulling the string of interconnected pouches, comprising a pair of second drive rollers between which the string of interconnected pouches is clamped and an associated second drive motor, and
- a second pouch position sensor 42, located upstream of the second drive unit 41, configured to emit a second sensor signal for determining alignment positions of individual pouches 100 in the string of interconnected pouches in relation to the one or more side edge sealing units 23.

The second drive device 40 is configured to control the second drive motor on the basis of the second sensor signal to align the individual pouches with the one or more side edge sealing units 23.

In an embodiment, the second pouch position sensor 42 is an optic sensor, for example a photocell, which faces the first or second wall 101, 102 of the film material for detecting optic marks, for example eye marks, on some or each of the pouches 100.

The second pouch position sensor 42 is positioned in between the first and second side edge sealing stations 21, 22.

The second film material drive device 40 further comprises a second compensator unit 43 for accommodating and varying a second portion of the string of interconnected pouches in order to allow a shift in mutual position between the individual pouches 100 in the string of interconnected pouches at the top edge sealing device 90 and the individual pouches in the string of interconnected pouches at the side edge heat-sealing device 20.

The second compensator unit 43 comprises a plurality of second compensator rollers over which a portion of the string of interconnected pouches is guided and which are movable to increase or decrease a length of the portion of the string of interconnected pouches guided over the second compensator rollers.

The second drive device 40 is controllable independently of the first drive device 30 to accommodate for a second stretching elongation of the first and second walls 101, 102 of film material in the side edge heat-sealing device 20, different from the first stretching elongation.

In an embodiment, the production system 1 may further comprise one or more of the following at the starting end of system, see at A in Figure 1:
- a film supply assembly which is configured to receive one or more rolls of flexible heat-sealable film material and configured to supply the film material,
- a bottom gusset folding assembly which is configured to unroll the film material supplied from a single roll into a folded shape such that the first and second walls 101, 102 and the bottom gusset are formed.

In an embodiment, the production system 1 may further comprise one or more of the following downstream of the heat-sealing device(s) 10, 20 along the path of the interconnected pouches:
- a cooling unit 50 configured to cool the pouches, in particular the heat-sealed regions of the pouches, e.g. wherein the cooling unit is arranged downstream of the side edge heat-sealing device 20,
- a die cut unit 60 configured to trim a contour of the pouches,
- a master drive unit 70 as part of the film drive and configured to pull a downstream end of the string of interconnected pouches.

In embodiments, the production system 1 may further comprise one or more of the following downstream devices/stations:
- a cutting device 80, e.g. downstream of the master drive unit 70, which cutting device 80 is configured to cut individual pouches from the string of interconnected pouches, e.g. making cuts to cut all pouches of a group into individualized pouches,
- a spout placing and top edge sealing station 90 which is configured to place a spout between top edge regions or top corner regions of the first and second walls 101, 102 of the individualized pouches and to heat-seal the top edge region,
- a filling station 95 configured to fill a product into the individualized pouches, e.g. via the spout,
- a closure application station 97 configured to apply a closure on the spout.

With reference to Figures 5a,5b and 6a, 6b, in the shown embodiment, four pouches 100 form a group 120. Each group 120 of four pouches 100 has two first pouches 100a and two second pouches 100b arranged in alternating sequence.

As follows form Figures 5a and 5b, use can be made of the production system 1 such that:
- now referring to Figure 5a, the group 120 of first and second pouches 100a, 100b is arranged at the first bottom sealing station 11,
- the first bottom sealing station 11 is operated so that each bottom sealing unit 13 of the first bottom sealing station 11, in a cycle, heat-seals:
   - the bottom region 104 of a first pouch 100a of the group 120,
   - the first side edge section 110a of the first side edge 103a and the second side edge portion 110b of the second side edge 103b of said first pouch 100a of the group 120,
   - the second side edge section 110b of the adjoining second side edge 103b of the upstream adjacent second pouch 100b,
   - the first side edge section 110a of the adjoining first side edge 103a of the downstream adjacent second pouch 100b,
- the string of interconnected pouches is then moved in the transport direction so that the group 120 is arranged at the second bottom sealing station 12, as shown in Figure 5b,
- to further establish the seals of the pouches of the group 120, the second bottom sealing station 12 is then operated so that each bottom sealing unit 13 of the second bottom sealing station 12, in a cycle, heat-seals:
   - the bottom region 104 of a second pouch 100b of the group 120,
   - the first side edge section 110a of the first side edge 103a and the second side edge section 110b of the second side edge 103b of said second pouch 100b of the group 120,
   - the second side edge section 110b of the adjoining second side edge 103b of the upstream adjacent first pouch 100a,
   - the first side edge section 110a of the adjoining first side edge 103a of the downstream adjacent first pouch 100a.

In Figures 5a, 5b, the hatched regions of the pouches are the regions of the pouch being sealed by the bottom sealing units 13.

The bottom heat-sealing device 10 is configured to seal each pouch 100 such that the first and second side edge sections 110a, 110b are sealed in at least two different, preferably consecutive cycles, e.g. at least being sealed in a first cycle with the first bottom sealing station 11 and in a second cycle with the second bottom sealing station 12.

The first and second side edge section 110a, 110b of each pouch 100 extend from a lower edge of the pouch to a location above the folding line 108.

The side edge heat-sealing device 20 of the production system 1 is configured to seal the side edges 103a, 103b of the pouches 100, such that the side edge sections 110a, 110b are sealed three times in total.

As shown the side edge heat-sealing device 20 is positioned downstream of the bottom heat-sealing device 10. The pouches 100 are first sealed by the bottom heat-sealing device 10 and then by the side edge heat-sealing device 20. This results in a sealed pouch as shown in Figure 2b, wherein the bottom region 104 of each pouch 100 is sealed once by the bottom heat-sealing device 10, wherein the portion of the side edges 103a, 103b which are located above the side edge sections 110a, 110b are sealed once by the side edge heat-sealing device 20. The side edge sections 110a, 110b of each pouch 100 is sealed three times, twice by the bottom heat-sealing device 10 and once by the side edge heat-sealing device 20. The triple points 109 are thus sealed three times.

As shown in Figures 6a and 6b, the sealing of the group 120 of pouches, further comprises:
- moving the string of interconnected pouches in the transport direction T so that the group 120 is arranged at the first side edge sealing station 21, as shown in Figure 6a,
- operating the first side edge sealing station 21 so that each side edge sealing unit 23 of the first side edge sealing station 21, in a cycle, heat-seals the first side edge 103a of a first pouch 100a of the group 120 and the adjoining second side edge 103b of a second pouch 100b upstream adjacent to said first pouch,
- moving the string of interconnected pouches in the transport direction T so that the group 120 is arranged at the second side edge sealing station 22, as shown in Figure 6b,
- operating the second side edge sealing station 22 so that each side edge sealing unit 23 of the second side edge sealing station 22, in a cycle, heat-seals the second side edge 103b of a first pouch 100a of the group 120 and the adjoining first side edge 103a of a second pouch 100b downstream adjacent to said first pouch.

In an embodiment, the sides of the bottom gusset are sealed together either by the bottom heat-sealing device 10 or by the side edge heat-sealing device 20.

The second aspect of the invention further relates to a method for producing flexible pouches 100 made from a heat-sealable material, wherein use is made of a production system 1, wherein the method comprises the steps of:
- pulling, with the film material drive 30, 40, 70 the string of interconnected pouches past the bottom heat-sealing device 10 and the side edge heat-sealing device 20 in a transport direction T,
- heat-sealing with the bottom heat-sealing device 10,
- heat-sealing with the side edge heat-sealing device 20,
wherein the step of pulling comprises the steps of:
- determining, with the first pouch position sensor 32 of the first film material drive device 30, alignment positions of individual pouches 100 in the string of interconnected pouches in relation to the one or more bottom sealing units 13 and emitting a first sensor signal on the basis thereof,
- controlling the first drive unit 31, e.g. the first drive motor thereof, of the first film material drive unit 30 on the basis of the first sensor signal to align the individual pouches 100 with the one or more bottom sealing units 13, and
- guiding a portion of the string of interconnected pouches over the plurality of first compensator rollers of the first compensator unit 33 and allowing the first compensator rollers to move to increase or decrease a length of the portion of the string of interconnected pouches guided along the first compensator rollers and to accommodate and vary a portion of the string of interconnected pouches in order to allow a shift in mutual position between the individual pouches in the string of interconnected pouches at the side edge heat-sealing device 20 and the individual pouches in the string of interconnected pouches at the bottom heat-sealing device 10.

In an embodiment, the method further comprises the following steps:
- determining, with the second pouch position sensor 42 of the second film material drive device 40, alignment positions of individual pouches in the string of interconnected pouches in relation to the one or more side edge sealing units 23 and emitting a second sensor signal on the basis thereof, and
- controlling the second drive unit 41, e.g. the second drive motor thereof, of the second film material drive device 40 on the basis of the second sensor signal to align the individual pouches 100 with the one or more side edge sealing units 23.

In an embodiment, the controlling of the second drive unit 41 is carried out independently of the controlling of the first drive unit 31, to accommodate for a first stretching elongation of the first and second walls of film material in the bottom heat-sealing device 10 and a second stretching elongation of the first and second walls of film material in the side edge heat-sealing device 20, different from the first stretching elongation.

## Claims

1. A production system (1) for the production of flexible pouches (100), preferably flexible stand-up pouches, the pouches each having a pouch body made from heat-sealable film material, preferably a metal-free heat-sealable film material, e.g. comprising a gusset, for example a bottom gusset,
wherein each pouch body comprises a first wall (101) and a second wall (102) of the film material which are opposed to each other,
wherein the production system comprises:
- a first heat-sealing device (10), for example a bottom heat-sealing device, configured to heat-seal one or more first regions, e.g. bottom regions (104), of one or more of the pouches, wherein the first heat-sealing device comprises one or more first sealing units (13), e.g. bottom sealing units,
- a second heat-sealing device (20), for example a side edge heat-sealing device, configured to heat-seal one or more second regions, e.g. side edge regions (103), of one or more of the pouches, wherein the second heat-sealing device comprises one or more second sealing units (23), e.g. side edge sealing units, and
- a film material drive configured to pull a string of interconnected pouches during production thereof past the first heat-sealing device (10) and the second heat-sealing device (20) in a transport direction (T),
wherein the second heat-sealing device (20) is arranged downstream of the first heat-sealing device (10) in the transport direction (T),
wherein the film material drive comprises a master film material drive device (70) which comprises a master drive unit (70), which is, seen along the transport direction (T), arranged downstream of the second heat-sealing device (20) and which is configured to pull a downstream end of the string of interconnected pouches,
**characterized in that**
the film material drive further comprises a first film material drive device (30), which comprises:
- a first drive unit (31) for pulling the string of interconnected pouches, the first drive unit comprising a first drive motor and a first controller to control the first drive motor, wherein the first drive unit (31) is, seen along the transport direction (T), arranged downstream of the first heat-sealing device (10) and upstream of the second heat-sealing device (20), wherein, for example the first motor is associated with a pair of first drive rollers between which the string of interconnected pouches is clamped,
- a first pouch position sensor (32), which is located upstream of the first drive unit (31) and is configured to emit a first sensor signal for determining a position relative to the transport direction (T) of the string of interconnected pouches for the purpose of alignment of individual pouches in relation to the one or more first sealing units (13), wherein, preferably, the first pouch position sensor is an optic sensor which faces the first or second wall of the film material for detecting optic marks, for example eye marks, on some or each of the pouches, and
- a first compensator unit (33) for accommodating and varying a first portion of the string of interconnected pouches in order to allow a shift in mutual position between:
• the individual pouches in the string of interconnected pouches at the first sealing device (10), and
• the individual pouches in the string of interconnected pouches at the second sealing device (20),
wherein the first compensator unit (33) is, seen along the transport direction (T), arranged downstream of the first drive unit (31) and upstream of the second heat-sealing device (20),
wherein the first controller of the first drive unit (31) is configured to control the first drive motor on the basis of the first sensor signal to align the individual pouches with the one or more first sealing units (13), and
wherein, preferably, the first compensator unit (33) comprises a plurality of first compensator rollers over which the first portion of the string of interconnected pouches is guided and which are movable to increase or decrease a length of the first portion of the string of interconnected pouches guided over the first compensator rollers.

2. The production system according to claim 1, wherein the first heat-sealing device is a bottom heat-sealing device (10) configured to heat-seal one or more bottom regions (104) of one or more of the pouches, wherein the bottom heat-sealing device comprises one or more bottom sealing units (13), and
wherein the second heat-sealing device is a side edge heat-sealing device (20) configured to heat-seal side edge regions (103) of one or more of the pouches, wherein the side edge heat-sealing device comprises one or more side edge sealing units (23).

3. The production system according to claim 1, wherein the second heat-sealing device is a bottom heat-sealing device (10) configured to heat-seal one or more bottom regions (104) of one or more of the pouches, wherein the bottom heat-sealing device comprises one or more bottom sealing units (13), and
wherein the first heat-sealing device is a side edge heat-sealing device (20) configured to heat-seal side edge regions (103) of one or more of the pouches, wherein the side edge heat-sealing device comprises one or more side edge sealing units (23).

4. The production system according to any one or more of the preceding claims, wherein the first heat-sealing device (10) comprises multiple of the first sealing units (13), and wherein the first pouch position sensor (32) is positioned in between the first sealing units (13).

5. The production system according to any one or more of the preceding claims, wherein the film material drive further comprises a second film material drive device (40), which comprises:
- a second drive unit (41) for pulling the string of interconnected pouches, which second drive unit comprises a second drive motor and a second controller to control the second drive motor, wherein the second drive unit (41) is, seen along the transport direction (T), arranged downstream of the second heat-sealing device (20), wherein, for example, the second drive motor is associated with a pair of second drive rollers between which the string of interconnected pouches is clamped, and
- a second pouch position sensor (42) which is located upstream of the second drive unit (41) and is configured to emit a second sensor signal for determining a position relative to the transport direction (T) of the string of interconnected pouches for the purpose of alignment of individual pouches in relation to the one or more second sealing units (23), wherein, preferably, the second pouch position sensor is an optic sensor which faces the first or second wall of the film material for detecting optic marks, for example eye marks, on some or each of the pouches,
wherein the second controller of the second drive unit (41) is configured to control the second drive motor on the basis of the second sensor signal to align the individual pouches with the one or more second sealing units (23).

6. The production system according to any one or more of the preceding claims 4 or 5, wherein the second heat-sealing device (20) comprises multiple of the second sealing units (23), and
wherein the second pouch position sensor (42) is positioned in between the second sealing units (23).

7. The production system according to any one or more of the preceding claims 4-6, wherein the second drive unit (41) is controllable independently of the first drive unit (31), to accommodate for a first stretching elongation of the first and second walls (101, 102) of film material between the first heat-sealing device (10) and the first drive (31), and a second stretching elongation of the first and second walls (101, 102) of film material between the second heat-sealing device (20) and the second drive (41), wherein the second stretching elongation may be different from the first stretching elongation.

8. The production system according to any one or more of the preceding claims 4-7, further comprising a third heat-sealing device (90), e.g. top edge heat-sealing device, which third heat-sealing device is located downstream of the second heat-sealing device (20) and is configured to heat-seal third regions, e.g. top edge regions (111) of one or more of the pouches, wherein the second film material drive device (40) further comprises a second compensator unit (43) for accommodating and varying a second portion of the string of interconnected pouches in order to allow a shift in mutual position between:
• the individual pouches in the string of interconnected pouches at the third heat-sealing device (90), and
• the individual pouches in the string of interconnected pouches at the second heat-sealing device (20),
wherein the second compensator unit (43) is, seen along the transport direction (T), arranged downstream of the second drive unit (41) and upstream of the third heat-sealing device (90), wherein, preferably, the second compensator unit (43) comprises a plurality of second compensator rollers over which the portion of the string of interconnected pouches is guided and which are movable to increase or decrease a length of the portion of the string of interconnected pouches guided over the second compensator rollers.

9. The production system according to one or more of the preceding claims 1 - 2 or 4 - 8, wherein each pouch body comprises:
- a first wall (101) and a second wall (102) which are opposed to each other,
- a bottom gusset which comprises a first bottom gusset wall part (106) and a second bottom gusset wall part (107) connected to each other along a folding line (108), wherein the bottom gusset is located between the first wall (101) and the second wall (102), and
- a first side edge (103a) and a second side edge (103b),
wherein the string of interconnected pouches (100) comprises first pouches (100a) and second pouches (100b), wherein the first and second pouches (100a, 100b) are alternating, and wherein at least one or more first pouches (100a) and at least one or more second pouches (100b) form a group (120), e.g. wherein two first pouches (100a) and two second pouches (100b) form a group,
wherein the first heat-sealing device is a bottom heat-sealing device (10) and comprises a first bottom heat-sealing station (11) and a second bottom heat-sealing station (12) arranged downstream of the first bottom heat-sealing station in the transport direction (T),
wherein each of the first and second bottom heat-sealing station (11, 12) comprises one or more bottom sealing units (13), e.g. two units (13), wherein each bottom sealing unit (13) comprises:
- a first bottom sealing jaw (14),
- a second bottom sealing jaw (15),
wherein the first and second bottom sealing jaw (14, 15) are configured to project across a bottom region (104) of the bottom gusset of a pouch and across a first side edge section (110a) of the first side edge (103a) and a second side edge section (110b) of the second side edge (103b) of said pouch, as well as across an adjoining side edge section (110b, 110a) of each adjacent pouch,
wherein the side edge sections (110a, 110b) each extend from below to above the folding line (108),
wherein each bottom sealing unit (13) of the first bottom sealing station (11) is configured to, in a cycle, heat-seal:
- the bottom region (104) of a first pouch (100a) of the group (120),
- the first side edge section (110a) of the first side edge (103a) and the second side edge section (110b) of the second side edge (103b) of said first pouch (100a) of the group (120),
- a second side edge section (110b) of the adjoining second side edge (103b) of the second pouch (100b) adjacent upstream to said first pouch (100a) of the group (120),
- a first side edge section (110a) of the adjoining first side edge (103a) of the second pouch (100b) adjacent downstream to said first pouch (100a) of the group (120),
wherein each bottom sealing unit (13) of the second bottom sealing station (12) is configured to, in a cycle, heat-seal:
- the bottom region (104) of a second pouch (100b) of the group (120),
- the first side edge section (110a) of the first side edge (103a) and the second side edge section (110b) of the second side edge (103b) of said second pouch (100b) of the group (120),
- a second side edge section (110b) of the adjoining second side edge (103b) of the first pouch (100a) adjacent upstream to said second pouch (100b) of the group (120),
- a first side edge section (110a) of the adjoining first side edge (103a) of the first pouch (100a) adjacent downstream to said second pouch (100b) of the group (120).

10. The production system according to any one or more of claims 1 - 9, wherein the production system is configured to move the interconnected string of pouches intermittently, e.g. stepwise, along the transport direction (T), wherein the string of interconnected pouches is transported one or more discrete pouch positions in the transport direction (T).

11. The production system according to claim 9 or 10, wherein the second heat-sealing device (20) is a side edge heat-sealing device (20) and is configured to heat-seal the side edges (103a, 103b) of the pouches, preferably wherein the side edge heat-sealing device (20) is positioned downstream of the bottom heat-sealing device (10).

12. A packaging machine for forming, filling and sealing a flexible pouch, e.g. a horizontal form-fill-seal packaging machine, comprising the production system according to any one or more of claims 1 - 11, wherein the packaging machine further comprises at least one of the following:
- a cooling unit (50) along the path of the string of interconnected pouches and configured to cool the heat-sealed pouches, preferably wherein the cooling unit is arranged downstream of the heat-sealing devices (10, 20),
- a die cut unit (60) along the path of the string of interconnected pouches and configured to trim a contour of the pouches and/or to punch a hole into the pouches,
- a master drive unit (70) as part of the film material drive and arranged along the path of the string of interconnected pouches and configured to pull a downstream end of the string of interconnected pouches,
- a cutting device (80), e.g. downstream of the master drive unit (70), which cutting device (80) is configured to cut individual pouches from the string of interconnected pouches, e.g. cutting a group of pouches into individual pouches,
- a filling station (95) configured to fill a product into the individualized pouches,
- a top edge sealing station (90) which is configured to heat-seal a top edge region, alternatively a spout placing and top edge sealing station (90) which is configured to place a spout in a top edge region between first and second walls of the individualized pouches (100) and to heat-seal the top edge region once the spout is placed.

13. A packaging production line for forming, filling, and sealing a flexible pouch, comprising the production system according to any one or more of claims 1 - 11, wherein the packaging line further comprises at least one of the following:
- a cooling unit (50) along the path of the string of interconnected pouches and configured to cool the heat-sealed pouches, preferably wherein the cooling unit is arranged downstream of the heat-sealing devices (10, 20),
- a die cut unit (60) along the path of the string of interconnected pouches and configured to trim a contour of the pouches or to punch a hole into the pouches,
- a master drive unit (70) as part of the film material drive and arranged along the path of the string of interconnected pouches and configured to pull a downstream end of the string of interconnected pouches,
- a cutting device (80), e.g. downstream of the master drive unit (70), which cutting device (80) is configured to cut individual pouches from the string of interconnected pouches, e.g. cutting a group of pouches into individual pouches,
- a spout placing and top edge sealing station (90) which is configured to place a spout in a top edge region between first and second walls of the individualized pouches (100) and to heat-seal the top edge region once the spout is placed,
- a filling station (95) configured to fill a product into the individualized pouches via the spout,
- a closure application station (97) configured to apply a closure, e.g. a cap, on the spout.

14. A method for producing flexible pouches (100), preferably flexible stand-up pouches, said pouches each having a pouch body made from heat-sealable film material, preferably a metal-free heat-sealable film material, e.g. the pouch body comprising a gusset, e.g. a bottom gusset,
wherein use is made of a production system according to any one or more of the claims 1-11 or a packaging machine according to claim 12 or a packaging production line according to claim 13, which comprises the first heat-sealing device (10), the second heat-sealing device (20) and the film material drive,
wherein the pouches have a pouch body comprising a first wall (101) and a second wall (102) of the film material which are opposed to each other,
wherein the method comprises the steps of:
- pulling, with the film material drive, a string of interconnected pouches past the first heat-sealing device (10) and the second heat-sealing device (20) in a transport direction (T),
- heat-sealing the respective bottom regions (104) of one or more of the pouches with the first or second heat-sealing device,
- heat-sealing the side edge regions (103) of one or more of the pouches with the first or second heat-sealing device,
wherein the step of pulling comprises the steps of:
- determining a position relative to the transport direction (T) of the string of interconnected pouches for the purpose of alignment of individual pouches in relation to the one or more first sealing units (13), by means of the first pouch position sensor (32) of the first film material drive device (30), the first pouch position sensor (32) detecting optic marks, for example eye marks, and emitting a first sensor signal on the basis thereof,
- controlling by a first controller the first drive unit (31), e.g. the first drive motor thereof, of the first film material drive device (30) on the basis of the first sensor signal to align the individual pouches with the one or more first sealing units (13), and
- accommodating and varying a first portion of the string of interconnected pouches in the first compensator unit (33), e.g. by guiding the first portion of the string of interconnected pouches over the plurality of first compensator rollers of the first compensator unit (33) and allowing the first compensator rollers to move in order to increase or decrease the length of the first portion of the string of interconnected pouches guided along the first compensator rollers, in order to allow a shift in mutual position between:
- the individual pouches in the string of interconnected pouches at the second heat-sealing device (20) and
- the individual pouches in the string of interconnected pouches at the first heat-sealing device (10).

15. The method according to claim 14, wherein the step of pulling further comprises the steps of:
- determining, with the second pouch position sensor (42) of the second film material drive device (40), alignment positions relative to the transport direction (T) of individual pouches in the string of interconnected pouches in relation to the one or more second sealing units (23) and emitting a second sensor signal on the basis thereof, and
- controlling by the second controller the second drive unit (41), e.g. the second drive motor thereof, of the second film material drive device (40) on the basis of the second sensor signal to align the individual pouches with the one or more second sealing units (23).

16. The method according to claim 15, wherein the controlling of the second drive unit (41) is carried out independently of the controlling of the first drive unit (31), to accommodate for a first stretching elongation of the first and second walls (101, 102) of film material in the first heat-sealing device (10) and a second stretching elongation of the first and second walls (101, 102) of film material in the second heat-sealing device (20), wherein the second stretching elongation may be different from the first stretching elongation.
